# EUROPÄISCHE PATENTSCHRIFT

(11) **EP 3 061 673 B1**
(45) Veröffentlichungstag und Bekanntmachung des Hinweises auf die Patenterteilung: **19.06.2019**
(21) Anmeldenummer: 16157618.6
(22) Anmeldetag: 26.02.2016
(51) Int. Cl.: B62D 23/00, B62D 27/02

(54) **FAHRZEUGKAROSSERIE**
CAR BODYWORK
CARROSSERIE POUR VÉHICULE

(30) Priorität: 27.02.2015 EP 15157044
(43) Veröffentlichungstag der Anmeldung: 31.08.2016
(73) Patentinhaber: MAGNA STEYR Fahrzeugtechnik AG & Co KG, 8041 Graz (AT)
(72) Erfinder: GÖTZINGER, Bruno, 8045 Weinitzen (AT); KRIEGER, Horst, 8453 St. Johann i.S. (AT); TAUCHER, Jürgen, 8261 Sinabelkirchen (AT)
(74) Vertreter: Zangger, Bernd

(56) Entgegenhaltungen:
- EP-A1- 2 786 920
- EP-A2- 1 069 027
- EP-A2- 1 473 213
- DE-A1- 19 622 661
- DE-A1-102006 041 090
- GB-A- 2 491 846
- US-A- 5 155 961
- US-A- 5 435 110

## Beschreibung

### Gebiet der Erfindung

Die vorliegende Erfindung betrifft eine Fahrzeugkarosserie umfassend ein Knotenelement und ein erstes und zweites Profil.

### Stand der Technik

Derartige Fahrzeugkarosserien, die mit Hilfe von Profilen und diese verbindenden Knotenelementen aufgebaut werden, werden als Fahrzeugkarosserien in "Space-Frame" Bauweise bezeichnet.

Dabei werden üblicherweise verschiedenartige Knotenelemente innerhalb eines Fahrzeuges verwendet, beispielsweise andere Knoten in einem Vorbau als in einem Heckwagen eines Fahrzeuges und zudem die Profile und Knotenelemente für jeden Fahrzeugtyp individuell entwickelt, um bestimmte Fahrzeuggeometrien abbilden zu können. Insgesamt müssen daher üblicherweise viele unterschiedliche Knotenelemente für den Einsatz an verschiedenen Positionen innerhalb eines Fahrzeuges, wie auch für den Einsatz in verschiedenen Fahrzeugtypen, in kleinen Serien relativ kostenaufwändig hergestellt werden.

### Zusammenfassung der Erfindung

Es ist eine Aufgabe der Erfindung, eine Fahrzeugkarosserie der genannten Art anzugeben, die ein Knotenelement und dessen Verbauung zu einer Karosserie angibt, so dass das Knotenelement mehrfach verwendbar wird und daher eine günstigere Produktion ermöglicht wird. Eine der Präambel von Anspruch 1 entsprechenden Fahrzeugkarosse ist in der EP 1 069 027 A2 offenbart.

Die Lösung der Aufgabe erfolgt durch eine Fahrzeugkarosserie umfassend ein Knotenelement und ein erstes und zweites Profil, wobei das Knotenelement eine erste Hauptfläche und eine zweite Hauptfläche umfasst, wobei die beiden Hauptflächen entlang einer Kontaktlinie miteinander verbunden sind und ausgehend von der Kontaktlinie in einem spitzen Winkel zueinander angeordnet sind, wobei das erste und zweite Profil an dem Knotenelement befestigt sind, wobei das erste an zumindest einer der beiden, innerhalb des spitzen Winkels liegenden, Innenseiten der beiden Hauptflächen am Knotenelement befestigt ist, wobei das zweite Profil an zumindest einer der beiden, innerhalb des spitzen Winkels liegenden, Innenseiten der beiden Hauptflächen am Knotenelement befestigt ist oder an einer der beiden Außenseiten der beiden Hauptflächen am Knotenelement befestigt ist.

Erfindungsgemäß sind an einem Knotenelement zumindest zwei Profile befestigt, wobei zumindest eines der beiden Profile an zumindest einer Innenseite eines spitzen Winkels zwischen zwei Flächen des Knotenelements befestigt ist. Erfindungsgemäß werden daher spitz zulaufende Flächen eines Knotenelementes für eine Profil-Anbindung genutzt, auch wenn derartige spitzwinkelige Bereiche an sich geometrisch ungünstig zur Aufnahme von zu verbindenden Bauteilen sind.

Durch die Nutzung der Innenseiten eines erfindungsgemäßen Knotenelements ist es jedoch möglich, das Knotenelement auf verschiedene Weise für Verbindungen zu nutzen, wobei jeweils andere Winkel zwischen den verbundenen Profilen entstehen, so dass diese an unterschiedlichen Positionen in einem Fahrzeug oder in unterschiedlichen Fahrzeugtypen unterschiedliche Funktionen wahrnehmen können. Zusätzlich können in Ausführungsformen der Erfindung über die selben Knotenelemente auch Höhenversätze zwischen den verbundenen Profilen realisiert werden.

Ein spitzer Winkel ist dabei ein Winkel größer als 0 Grad und kleiner als 90 Grad.

Die Innenseiten der Hauptflächen liegen innerhalb des spitzen Winkels bzw. definieren diesen, da diese Innenseiten die einander im spitzen Winkel zugewandten Seiten der beiden Hauptflächen sind.

Die Hauptflächen sind flächige Elemente, die bevorzugt vollständig eben ausgebildet sind. Wenn die Hauptflächen nicht zur Gänze eben sind, dann betreffen die angeführten Eigenschaften zumindest ebene Abschnitte der Hauptflächen.

Die Hauptflächen sind bevorzugt rechteckig ausgebildet.

Die Profile sind bevorzugt aus vier ebenen Flächen als Profilwandungen zusammengesetzt, die insbesondere einen quadratischen oder rechteckigen Querschnitt bilden können. Die Profile können jedoch auch als einfache Bleche oder Gußbauteile ausgeführt sein.

Das Knotenelement ist bevorzugt ein Guß-Knoten.

Das Knotenelement kann insbesondere im Bereich einer A Säule und/oder einer B Säule eines Kraftfahrzeuges eingesetzt werden.

Das erste Profil kann insbesondere ein Querträger sein. Das zweite Profil kann insbesondere ein Längsträger oder ein Schweller sein.

Vorzugsweise ist das erste Profil mit der Außenfläche einer ersten Profilwandung des ersten Profils an einer der beiden Innenseiten der beiden Hauptflächen vollflächig am Knotenelement befestigt, insbesondere verklebt (erste Variante). Auf diese Weise kann bevorzugt ein stumpfer Winkel zu einem zweiten Profil ausgebildet werden.

Vorzugsweise ist die Stirnseite einer, der ersten Profilwandung gegenüberliegenden, zweiten Profilwandung des vollflächig befestigten ersten Profils an der anderen der beiden Innenseiten der beiden Hauptflächen befestigt.

Das erste Profil 2 und/oder das zweite Profil 3 weist vorzugsweise zumindest an einer Profilwandung einen Überstand im Vergleich zu einer gegenüberliegenden Profilwandung auf. Das erste und/oder zweite Profil kann insbesondere schräg zu seiner Längsachse geschnitten sein.

Gemäß einer Ausführungsform (zweite Variante) kann das erste Profil an den Stirnseiten aller seiner Profilwandungen an einer der beiden Innenseiten der beiden Hauptflächen am Knotenelement befestigt sein. Diese Ausführungsform kann beispielsweise an einem weiteren Knotenelement der selben Fahrzeugkarosserie ausgebildet sein, wenn die Befestigung am ersten Knotenelement gemäß der zuvor genannten ersten Verbindungsvariante erfolgt, nämlich vollflächig. Die Verbindung in dieser zweiten Variante kann insbesondere durch Verschweißen erfolgen. Auf diese Weise kann bevorzugt ein rechter Winkel zu einem zweiten Profil ausgebildet werden.

In allen Verbindungsvarianten für das erste Profil, kann das zweite Profil an den Stirnseiten aller seiner Profilwandungen an einer der beiden Außenseiten der beiden Hauptflächen am Knotenelement befestigt sein. In der ersten Variante kann das zweite Profil insbesondere mit der Außenseite der vollflächig mit dem ersten Profil verbundenen Hauptfläche befestigt sein. In der zuletzt genannten zweiten Variante kann das zweite Profil insbesondere mit der Außenseite der nicht mit den Stirnseiten des ersten Profils verbundenen Hauptfläche befestigt sein.

Gemäß einer Ausführungsform ist die Höhe des Knotenelements in Richtung der Kontaktlinie der beiden Hauptflächen höher als die entsprechende Höhe des daran befestigten ersten und/oder zweiten Profils, insbesondere so, dass mittels des Knotens ein Höhenversatz zwischen erstem und zweitem Profil ausgebildet wird.

Das Knotenelement kann an dessen Oberseite und/oder an dessen Unterseite, also insbesondere an den Enden der Kontaktlinie der beiden Hauptflächen, jeweils eine Deckelfläche aufweisen, durch welche die erste und zweite Hauptfläche miteinander verbunden werden. Diese Deckelfläche oder Deckelflächen können als Flanschflächen zur Befestigung von Profilen genutzt werden.

Das Knotenelement kann im Bereich zumindest einer Verbindung mit dem ersten und/oder zweiten Profil zumindest eine Flanschfläche aufweisen, insbesondere zusätzlich zu sonst eventuell vorhandenen Deckelflächen. Die Flanschflächen können insbesondere im Wesentlichen vertikal, also in Richtung parallel zur Verbindungslinie, oder auch im Wesentlichen horizontal, insbesondere parallel zu Deckelflächen, angeordnet sein. Die Flanschflächen dienen insbesondere zum besseren Befestigen, bevorzugt Ankleben, von Profilen, bevorzugt an mehreren Seiten also mehreren Profilwandungen der Profile.

Insbesondere um größere Flächen zur Verklebung oder auch zur Verschweißung zu bieten, kann im Bereich zumindest einer Verbindung des Knotenelements mit dem ersten und/oder zweiten Profil zumindest ein Klebewinkel angeordnet ist, beispielsweise ein kleines Profil mit dreieckigem Querschnitt, das zwischen Hauptflächen des Knotenelements und Profilwandungen eines daran befestigten Profils angeordnet sein kann. Ein Klebewinkel kann einerseits Teil eines Knotenelementes sein, also insbesondere einstückig mit diesem ausgebildet sein, kann aber auch ein separates Bauteil sein, das bevorzugt nach dem Verkleben der Profilenden mit dem Knotenelement nachträglich an Knotenelement und Profil geklebt wird.

Ein Knotenelement kann auch Verrippungen zur Versteifung aufweisen, insbesondere an zumindest einer der Innenseiten der Hauptflächen.

Eine Fahrzeugkarosserie kann bevorzugt ein erstes Knotenelement umfasst mit einer Anordnung von Profilen nach der oben genannten ersten Variante der Verbindungen und zumindest ein zweites Knotenelement umfassen mit einer Anordnung von Profilen nach der oben genannten zweiten Variante der Verbindungen.

Dabei kann das erste Knotenelement baugleich mit dem zweiten Knotenelement sein, um möglichst viele Gleichteile in einer Fahrzeugkarosserie zu verwenden.

Bevorzugt umfasst eine Fahrzeugkarosserie zwei erste Knotenelemente und zwei zweite Knotenelemente, wobei bevorzugt ein erstes und ein zweites Knotenelement zueinander baugleich sind und das andere erste und zweite Knotenelement zueinander baugleich sind und die beiden letztgenannten Knotenelemente zu den beiden erstgenannten Knotenelementen spiegelbildlich sind.

Besonders bevorzugt umfasst die Fahrzeugkarosserie, insbesondere zusätzlich zu Knotenelementen zur Verbindung von jeweils zwei Profilen, zumindest ein Dreier-Knotenelement, wobei drei Profile aus drei verschiedenen Raumrichtungen an dem Dreier-Knotenelement befestigt sind, wobei das Dreier-Knotenelement eine erste Hauptfläche und eine zweite Hauptfläche umfasst, wobei die beiden Hauptflächen zumindest in einem ersten Abschnitt entlang einer Kontaktlinie miteinander verbunden sind und ausgehend von der Kontaktlinie in einem spitzen Winkel zueinander angeordnet sind.

Eine der beiden Hauptflächen kann einen Versatz aufweisen, so dass die beiden Hauptflächen in einem zweiten Abschnitt entlang einer versetzten Kontaktlinie miteinander verbunden sind und ausgehend von der versetzten Kontaktlinie in einem stumpfen Winkel zueinander angeordnet sind. Eine der beiden Hauptflächen, insbesondere in einem Dreier-Knotenelement, kann also nicht durchgängig eben sein, sondern insbesondere aus zwei zueinander versetzten Ebenen bestehen, wobei die andere Hauptfläche in einem dieser Abschnitt an einer ersten Seite der erstgenannten Hauptfläche liegen kann und nach dem Versatz auf der anderen Seite der erstgenannten Hauptfläche, sodass die beiden Hauptflächen in einem Abschnitt einen spitzen Winkel zueinander einschließen und in einem zweiten Abschnitt, entlang der Höhe des Knotenelements, einen stumpfen Winkel zueinander einschließen. Auf diese Weise wird die Befestigung von mehreren Profilen aus verschiedenen Raumrichtungen erleichtert.

### Kurzbeschreibung der Zeichnungen

Die Erfindung wird im Folgenden beispielhaft unter Bezugnahme auf die Zeichnungen beschrieben.
- Fig. 1: zeigt schematisch einen Bereich einer erfindungsgemäßen Fahrzeugkarosserie von oben mit Verbindungen in einer ersten Variante.
- Fig. 2: zeigt schematisch einen Bereich einer erfindungsgemäßen Fahrzeugkarosserie von oben mit Verbindungen in einer zweiten Variante.
- Fig. 3: zeigt schematisch einen größeren Bereich einer erfindungsgemäßen Fahrzeugkarosserie dreidimensional (oben) und von oben (unten) mit Verbindungen in der ersten und der zweiten Variante.
- Fig. 4: ist eine dreidimensionale Darstellung eines Knotenelementes ohne (links) und mit verbundenen Profilen (rechts).
- Fig. 5: ist eine dreidimensionale Darstellung eines Knotenelementes gemäß Fig. 4 ohne (links) und mit verbundenen Profilen (rechts) aus anderer Perspektive.
- Fig. 6: zeigt schematisch einen Bereich einer erfindungsgemäßen Fahrzeugkarosserie von oben mit Verbindungen in einer ersten Variante (oben) und zweiten Variante (unten) in geschweißter Ausführung (links) und geklebter Ausführung (rechts).
- Fig. 7: ist eine dreidimensionale Darstellung eines größeren Bereichs einer erfindungsgemäßen Fahrzeugkarosserie mit je zwei Verbindungen in der ersten und der zweiten Variante in geschweißter Ausführung (links) und geklebter Ausführung (rechts).
- Fig. 8: ist eine dreidimensionale Darstellung eines Dreier-Knotenelementes ohne (links) und mit verbundenen Profilen (rechts).
- Fig. 9: ist eine dreidimensionale Darstellung eines Dreier-Knotenelementes gemäß Fig. 8 ohne (links) und mit verbundenen Profilen (rechts) aus anderer Perspektive.
- Fig. 10: ist eine dreidimensionale Darstellung eines Bereiches einer erfindungsgemäßen Fahrzeugkarosserie mit Dreier-Knotenelement und einfachem (Zweier-) Knotenelement mit verbundenen Profilen in geschweißter Ausführung (links) und geklebter Ausführung (rechts).

### Detaillierte Beschreibung der Erfindung

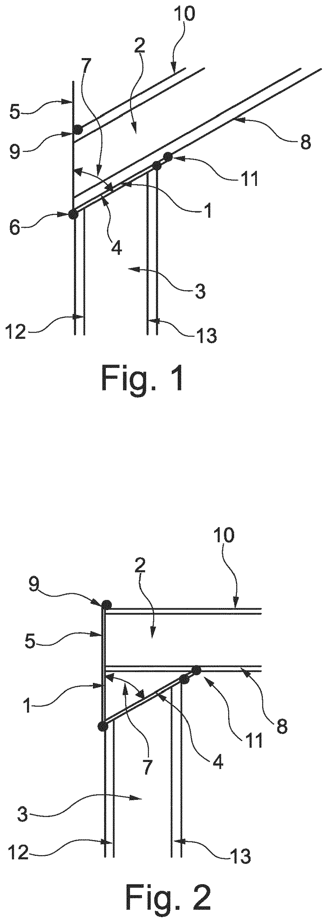

Fig. 1 zeigt schematisch einen Bereich einer erfindungsgemäßen Fahrzeugkarosserie um ein Knotenelement 1, mit Verbindungen des Knotenelements 1 zu einem ersten Profil 2 und einem zweiten Profil 3 in einer ersten Variante. Die Fig. 2 zeigt eine Anbindung beispielsweise der selben Profile 2 und 3 an das selbe oder baugleiche Knotenelement 1, jedoch in einer zweiten Verbindungsvariante.

Das Knotenelement 1 umfasst eine erste Hauptfläche 4 und eine zweite Hauptfläche 5, wobei die beiden Hauptflächen 4, 5 entlang einer geraden Kontaktlinie 6 miteinander verbunden sind und ausgehend von der Kontaktlinie 6 in einem spitzen Winkel 7 zueinander angeordnet sind. Der spitze Winkel 7 ist größer als Null Grad und kleiner 90 Grad und liegt bevorzugt zwischen 50 und 70 Grad, besonders bevorzugt bei ca. 60 Grad.

Das erste und zweite Profil 2, 3 sind an dem Knotenelement 1 befestigt und insbesondere verschweißt oder verklebt in den als kleine Kreise markierten Berührungspunkten. Das erste Profil 2 ist in beiden Varianten (Fig. 1 und Fig. 2) an den innerhalb des spitzen Winkels 7 liegenden Innenseiten der beiden Hauptflächen 4 und 5 am Knotenelement 1 befestigt.

Die dargestellten Profile 2 und 3 sind aus je vier Profilwandungen 8,10, 12, 13 zusammengesetzt, mit quadratischem oder rechteckigem Querschnitt.

In Fig. 1 ist das erste Profil 2 mit der Außenfläche der ersten Profilwandung 8 an der Innenseiten der Hauptflächen 4 vollflächig am Knotenelement 1 befestigt.

Die Stirnseite 9 der, der ersten Profilwandung 8 gegenüberliegenden, zweiten Profilwandung 10 des ersten Profils 2 ist an der Innenseiten der anderen Hauptfläche, nämlich Hauptfläche 5, befestigt.

Die Außenfläche der ersten Profilwandung 8 des ersten Profils 2 ist entlang einer Linie an einem Ende 11 der Hauptfläche 4 befestigt, insbesondere verschweißt.

Das zweite Profil 3 ist an seinen Stirnseite der Profilwandungen 12, 13 an der Außenseite der ersten Hauptfläche 4 am Knotenelement 1 befestigt.

Zwischen dem ersten Profil 2 und dem zweiten Profil 3 wird auf diese Weise ein stumpfer Winkel von ca. 120 Grad ausgebildet.

Die Fig. 2 zeigt eine zweite Variante der Verbindung der Profile 2, 3 mit dem Knotenelement 1, wobei das erste Profil 2 im rechten Winkel an zumindest einer Stirnseite 9, bevorzugt an mehreren, insbesondere allen seinen Stirnseiten, seiner Profilwandungen 8, 10 an der Innenseite der zweiten Hauptfläche 5 am Knotenelement 1 befestigt ist. Hierbei erfolgt - sofern nicht zusätzliche Flanschflächen oder Klebewinkel verwendet werden - kein flächiger Kontakt zwischen den Profilen 2, 3 und dem Knotenelement 1. Die weiteren Verbindungspunkte der Variante der Fig. 2 entsprechen denen, der Fig. 1.

In der Verbindungsvariante der Fig. 2 ist zwischen dem ersten Profil 2 und dem zweiten Profil 3 ein rechter Winkel von ca. 90 Grad ausgebildet.

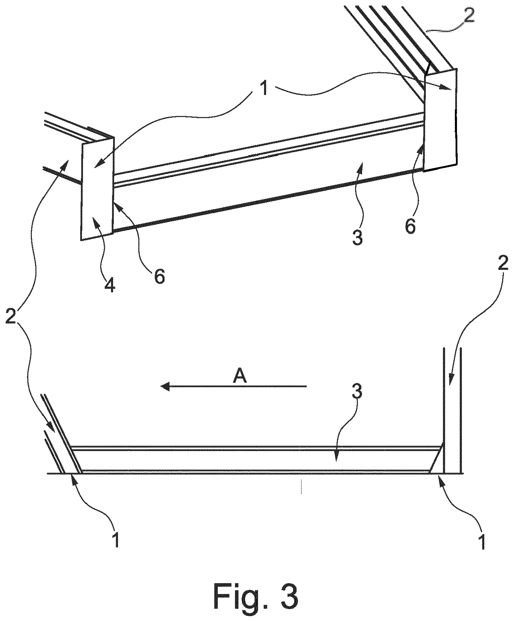

Fig. 3 zeigt einen Bereich einer erfindungsgemäßen Fahrzeugkarosserie dreidimensional (oben) und von oben (unten) mit Verbindungen in der oben beschriebenen ersten Variante (linkes Knotenelement 1 an einer A-Säule eines Fahrzeuges) und der zweiten Variante (rechtes Knotenelement 1 an einer B-Säule eines Fahrzeuges). Das zweite Profil ist in diesem Beispiel ein Schweller in Fahrzeuglängsrichtung bzw. Fahrtrichtung A. Die beiden ersten Profile 2 sind Querträger der Fahrzeugkarosserie.

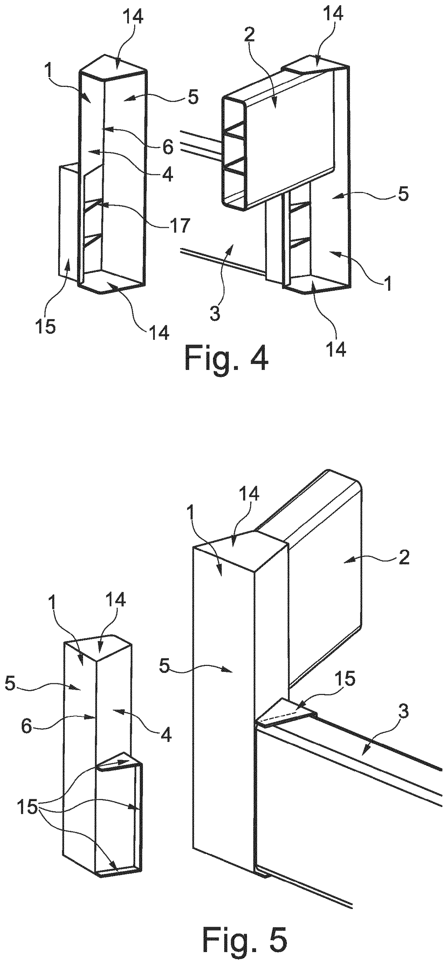

Fig. 4 ist eine dreidimensionale Darstellung eines Knotenelementes 1 ohne (links) und mit verbundenen Profilen 2 und 3 (rechts). Die selbe Anordnung ist in Fig. 5 aus anderer Perspektive (von "außen" bezüglich des spitzen Winkels der Hauptflächen des Knotenelements 1) dargestellt.

Das Knotenelement 1 weist an einer Innenseite der ersten Hauptfläche 4 bereichsweise Verrippungen 17 auf. An der Außenseite desselben Bereichs der ersten Hauptfläche 4 sind Flanschflächen 15 zur besseren Aufnahme eines zweiten Profils 3 ausgebildet. Dem ersten Profil 2 dient eine Deckelfläche 14 als Flanschfläche.

Die Höhe des Knotenelements 1 in Richtung der Kontaktlinie 6 der beiden Hauptflächen 4, 5 ist größer als die entsprechende Höhe des daran befestigten ersten und zweiten Profils 2, 3. Dadurch kann mittels des Knotenelements 1 ein Höhenversatz zwischen erstem und zweitem Profil 2 und 3 ausgebildet werden.

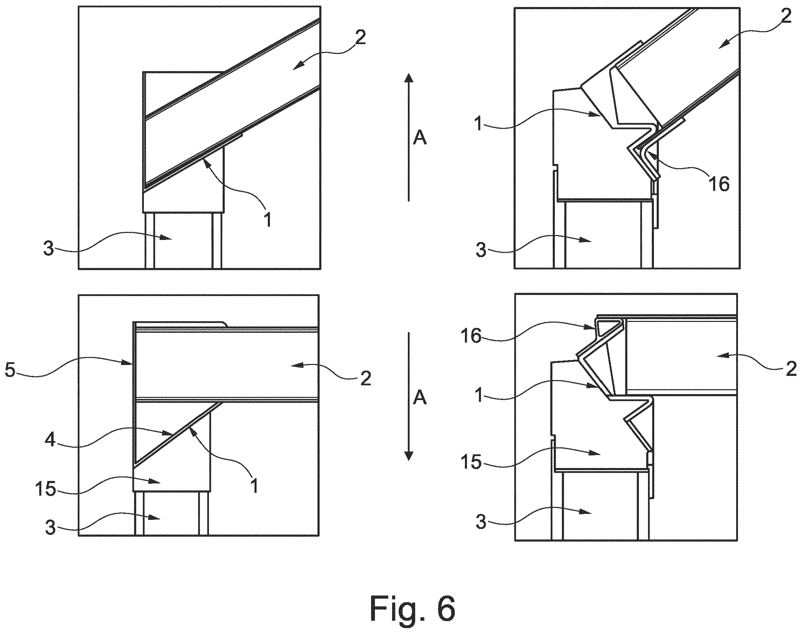

Fig. 6 zeigt schematisch einen Bereich einer erfindungsgemäßen Fahrzeugkarosserie von oben mit Verbindungen in der ersten Variante (oben dargestellt, beispielsweise an einer A-Säule verwendet) und der zweiten Variante (unten dargestellt, beispielsweise an einer B-Säule verwendet), jeweils in geschweißter Ausführung (links) und geklebter Ausführung (rechts). Dabei verwendet die geklebte Ausführung Klebewinkel 16, beispielsweise Kantenbleche, zur besseren Befestigung des ersten Profils 2, eines Querträgers. Flanschflächen 15 sind in beiden Varianten zur Befestigung des zweiten Profils 3, eines Schwellers, vorgesehen.

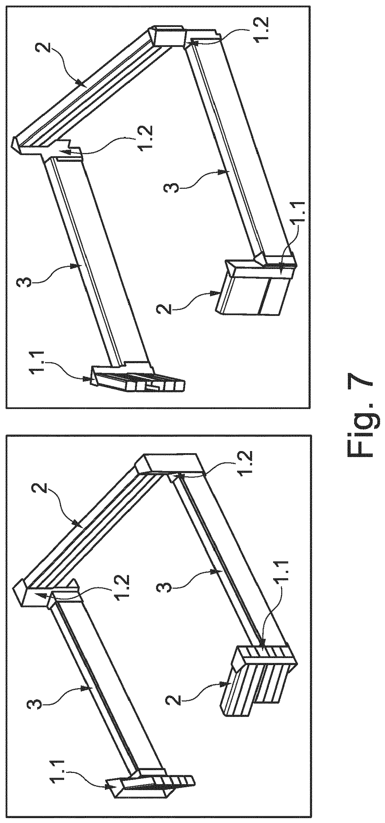

Fig. 7 ist eine Darstellung eines größeren Bereichs einer erfindungsgemäßen Fahrzeugkarosserie mit je zwei Verbindungen in der ersten und der zweiten Variante in geschweißter Ausführung (links) und geklebter Ausführung (rechts).

Die dargestellte Fahrzeugkarosserie umfasst zwei erste Knotenelemente 1.1 mit der ersten Variante der Anordnung von Profilen (gemäß Fig. 1) und zwei zweite Knotenelemente 1.2 mit der zweiten Variante der Anordnung von Profilen (gemäß Fig. 2).

Die ersten Knotenelemente 1.1 sind jeweils baugleich oder spiegelbildlich baugleich mit den zweiten Knotenelementen 1.2, wobei die sich diagonal gegenüberstehenden Knotenelemente 1.1, 1.2 jeweils baugleich sind und die am selben zweiten Profil 3, nämlich Schweller, oder selben ersten Profil 2, nämlich Querträger, angeordneten Profile 1.1, 1.2 jeweils zueinander spiegelbildlich sind.

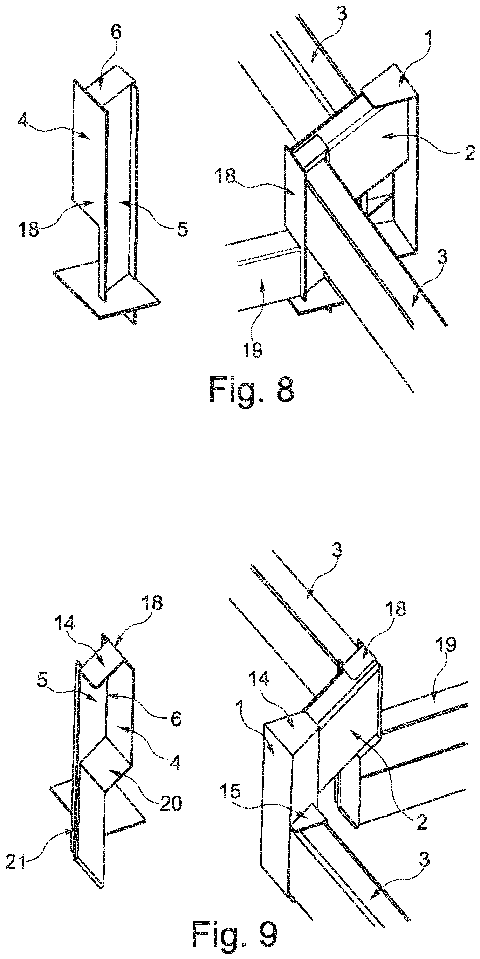

Fig. 8 zeigt ein erfindungsgemäßes Dreier-Knotenelement 18 ohne (links) und mit verbundenen Profilen (rechts) aus einer ersten Perspektive, und Fig. 9 das selbe aus einer anderen Perspektive.

Drei Profile, nämlich erstes Profil 2, zweites Profil 3 und ein drittes Profil 19 sind aus jeweils verschiedenen Raumrichtungen an dem Dreier-Knotenelement 18 befestigt. Das Dreier-Knotenelement 18 umfasst wieder eine erste Hauptfläche 4 und eine zweite Hauptfläche 5, wobei die beiden Hauptflächen 4, 5 in einem ersten Abschnitt entlang einer Verbindungslinie 6 miteinander verbunden sind und ausgehend von der Verbindungslinie 6 in einem spitzen Winkel 7 zueinander angeordnet sind. In diesem Abschnitt entspricht das Dreier-Knotenelement 18 damit einem Standard (Zweier-) Knotenelement 1.

Die erste Hauptfläche 4 weist hier jedoch einen Versatz 20 auf, so dass die beiden Hauptflächen 4, 5 in einem zweiten Abschnitt entlang einer versetzten geraden Verbindungslinie 21 miteinander verbunden sind und ausgehend von der versetzten Verbindungslinie 21 in einem stumpfen Winkel zueinander angeordnet sind.

Dabei verlaufen die zweiten Profile 3 als Längsträger bzw. Schweller in Fahrzeuglängsrichtung, das erste Profil 2 ist ein äußerer schräg angeordneter Querträger, das dritte Profil 19 ein innerer Querträger normal auf die Fahrzeuglängsrichtung.

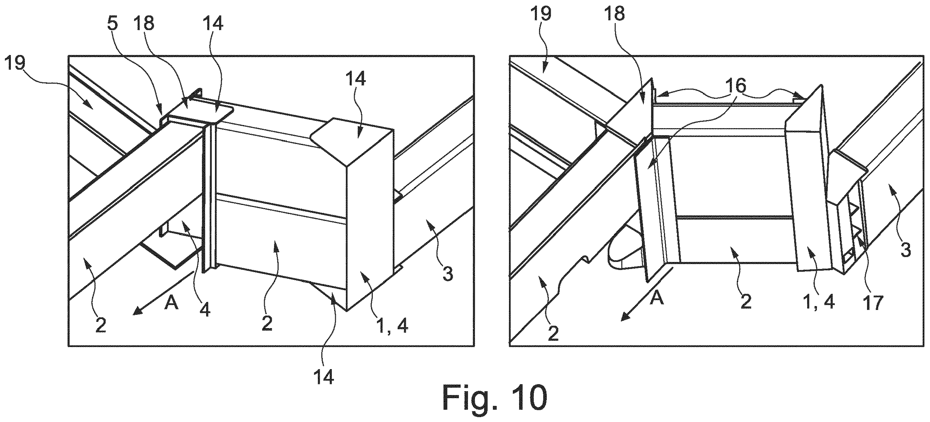

Fig. 10 zeigt schließlich einen Ausschnitt einer Fahrzeugkarosserie mit Dreier-Knotenelement 18 und einfachem (Zweier-) Knotenelement 1 mit jeweils verbundenen Profilen 2, 3, 19 in geschweißter Ausführung (links) und geklebter Ausführung (rechts). Auch das Dreier-Knotenelement 18 weist Deckelflächen 14 auf und kann weitere Flanschflächen aufweisen. Die geklebte Ausführung verwendet zusätzliche Bleche als Klebewinkel 16.

### Bezugszeichenliste

- 1: Knotenelement
- 1.1: erstes Knotenelement
- 1.2: zweites Knotenelement
- 2: erstes Profil
- 3: zweites Profil
- 4: Hauptfläche
- 5: Hauptfläche
- 6: Verbindungslinie
- 7: spitzer Winkel
- 8: erste Profilwandung des ersten Profils
- 9: Stirnseite der zweiten Profilwandung
- 10: zweite Profilwandung des ersten Profils
- 11: Ende Hauptfläche
- 12: Profilwandung des zweiten Profils
- 13: Profilwandung des zweiten Profils
- 14: Deckelfläche
- 15: Flanschfläche
- 16: Klebewinkel
- 17: Verrippungen
- 18: Dreier-Knotenlement
- 19: drittes Profil
- 20: Versatz
- 21: versetzte Verbindungslinie

- A: Fahrtrichtung

## Patentansprüche

1. Fahrzeugkarosserie umfassend ein Knotenelement (1) und ein erstes und zweites Profil (2, 3), wobei das Knotenelement (1) eine erste Hauptfläche (4) und eine zweite Hauptfläche (5) umfasst, wobei die beiden Hauptflächen (4, 5) entlang einer Kontaktlinie (6) miteinander verbunden sind und ausgehend von der Kontaktlinie (6) in einem spitzen Winkel (7) zueinander angeordnet sind, wobei das erste und zweite Profil (2, 3) an dem Knotenelement (1) befestigt sind, wobei das erste Profil (2) an zumindest einer der beiden, innerhalb des spitzen Winkels (7) liegenden, Innenseiten der beiden Hauptflächen (4, 5) am Knotenelement (1) befestigt ist, **dadurch gekennzeichnet, dass** das zweite Profil (3) an zumindest einer der beiden, innerhalb des spitzen Winkels (7) liegenden, Innenseiten der beiden Hauptflächen (4, 5) am Knotenelement (1) befestigt ist oder an einer der beiden Außenseiten der beiden Hauptflächen (4, 5) am Knotenelement (1) befestigt ist.

2. Fahrzeugkarosserie nach Anspruch 1,
**dadurch gekennzeichnet, dass** das erste Profil (2) mit der Außenfläche einer ersten Profilwandung (8) an zumindest einer der beiden Innenseiten der beiden Hauptflächen (4, 5) vollflächig am Knotenelement (1) befestigt ist.

3. Fahrzeugkarosserie nach Anspruch 2,
**dadurch gekennzeichnet, dass** die Stirnseite (9) einer, der ersten Profilwandung (8) gegenüberliegenden, zweiten Profilwandung (10) des ersten Profils an der anderen der beiden Innenseiten der beiden Hauptflächen (4, 5) befestigt ist.

4. Fahrzeugkarosserie nach Anspruch 1,
**dadurch gekennzeichnet, dass** das erste Profil (2) an zumindest einer Stirnseite (9), bevorzugt mehreren Stirnseiten, seiner Profilwandungen (8, 10) an einer der beiden Innenseiten der beiden Hauptflächen (4, 5) am Knotenelement (1) befestigt ist.

5. Fahrzeugkarosserie nach einem der Ansprüche 2 bis 4,
**dadurch gekennzeichnet, dass** eine Außenfläche einer ersten Profilwandung (8) des ersten Profils (2) an einem Ende (11) einer der beiden Hauptflächen (4, 5) des Knotenelements (1) befestigt ist.

6. Fahrzeugkarosserie nach einem der Ansprüche 2 bis 5,
**dadurch gekennzeichnet, dass** das zweite Profil (3) an zumindest einer Stirnseite, bevorzugt mehreren Stirnseiten, seiner Profilwandungen (12, 13) an einer der beiden Außenseiten der beiden Hauptflächen (4, 5) am Knotenelement (1) befestigt ist.

7. Fahrzeugkarosserie nach zumindest einem der vorhergehenden Ansprüche,
**dadurch gekennzeichnet, dass** die Höhe des Knotenelements (1) in Richtung der Kontaktlinie (6) der beiden Hauptflächen (4, 5) größer ist als die entsprechende Höhe des daran befestigten ersten und/oder zweiten Profils (2, 3), wobei insbesondere mittels des Knotenelements (1) ein Höhenversatz zwischen erstem und zweitem Profil (2, 3) ausgebildet wird.

8. Fahrzeugkarosserie nach zumindest einem der vorhergehenden Ansprüche,
**dadurch gekennzeichnet, dass** das Knotenelement (1) an dessen Oberseite und/oder an dessen Unterseite eine Deckelfläche (14) aufweist, durch welche die erste und zweite Hauptfläche (4, 5) miteinander verbunden werden.

9. Fahrzeugkarosserie nach zumindest einem der vorhergehenden Ansprüche,
**dadurch gekennzeichnet, dass** das Knotenelement (1) im Bereich zumindest einer Verbindung mit dem ersten und/oder zweiten Profil (2, 3) zumindest eine Flanschfläche (15) aufweist.

10. Fahrzeugkarosserie nach zumindest einem der vorhergehenden Ansprüche,
**dadurch gekennzeichnet, dass** im Bereich zumindest einer Verbindung des Knotenelements (1) mit dem ersten und/oder zweiten Profil (2, 3) zumindest ein Klebewinkel (16) angeordnet ist.

11. Fahrzeugkarosserie nach zumindest einem der vorhergehenden Ansprüche,
**dadurch gekennzeichnet, dass** das Knotenelement (1) Verrippungen (17) zur Versteifung aufweist, insbesondere an zumindest einer der Innenseiten der Hauptflächen (4, 5).

12. Fahrzeugkarosserie nach zumindest einem der vorhergehenden Ansprüche,
**dadurch gekennzeichnet, dass** die Fahrzeugkarosserie zumindest ein erstes Knotenelement (1.1) umfasst mit einer Anordnung von Profilen (2, 3) nach Anspruch 2 und zumindest ein zweites Knotenelement (1.2) umfasst mit einer Anordnung von Profilen (2, 3) nach Anspruch 4.

13. Fahrzeugkarosserie nach Anspruch 12,
**dadurch gekennzeichnet, dass** das erste Knotenelement (1.1) baugleich oder spiegelbildlich baugleich mit dem zweiten Knotenelement (1.2) ist.

14. Fahrzeugkarosserie nach Anspruch 12 oder 13,
**dadurch gekennzeichnet, dass** die Fahrzeugkarosserie zwei erste Knotenelemente (1.1) umfasst und zwei zweite Knotenelemente (1.2) umfasst, wobei bevorzugt ein erstes Knotenelement (1.1) und ein zweites Knotenelement (1.2) zueinander baugleich sind und das andere erste Knotenelement (1.1) und zweite Knotenelement (1.2) zueinander baugleich sind und die beiden letztgenannten Knotenelemente (1.1, 1.2) zu den beiden erstgenannten Knotenelementen (1.1, 1.2) spiegelbildlich sind.

15. Fahrzeugkarosserie nach zumindest einem der vorhergehenden Ansprüche,
**dadurch gekennzeichnet, dass** die Fahrzeugkarosserie zumindest ein Dreier-Knotenlement (18) umfasst, wobei drei Profile (2, 3, 19) aus drei verschiedenen Raumrichtungen an dem Dreier-Knotenelement (18) befestigt sind, wobei das Dreier-Knotenelement (18) eine erste Hauptfläche (4) und eine zweite Hauptfläche (5) umfasst, wobei die beiden Hauptflächen (4, 5) zumindest in einem ersten Abschnitt entlang einer Verbindungslinie (6) miteinander verbunden sind und ausgehend von der Verbindungslinie (6) in einem spitzen Winkel (7) zueinander angeordnet sind.

16. Fahrzeugkarosserie nach zumindest einem der vorhergehenden Ansprüche,
**dadurch gekennzeichnet, dass** eine der beiden Hauptflächen (4, 5) einen Versatz (20) aufweist, so dass die beiden Hauptflächen (4, 5) in einem zweiten Abschnitt entlang einer versetzten Verbindungslinie (21) miteinander verbunden sind und ausgehend von der versetzten Verbindungslinie (21) in einem stumpfen Winkel zueinander angeordnet sind.

## Claims

1. Car bodywork comprising a node element (1) and a first and second profile (2, 3), the node element (1) comprising a first main face (4) and a second main face (5), the two main faces (4, 5) being connected to one another along a contact line (6) and, starting from the contact line (6), being arranged at an acute angle (7) with respect to one another, the first and second profile (2, 3) being fastened to the node element (1), the first profile (2) being fastened to the node element (1) on at least one of the two inner sides of the two main faces (4, 5), which inner sides lie within the acute angle (7), **characterized in that** the second profile (3) is fastened to the node element (1) on at least one of the two inner sides of the two main faces (4, 5), which inner sides lie within the acute angle (7), or is fastened to the node element (1) on one of the two outer sides of the two main faces (4, 5).

2. Car bodywork according to Claim 1, **characterized in that** the first profile (2) is fastened to the node element (1) over the full surface area by way of the outer face of a first profile wall (8) on at least one of the two inner sides of the two main faces (4, 5).

3. Car bodywork according to Claim 2, **characterized in that** the end side (9) of a second profile wall (10) of the first profile, which second profile wall (10) lies opposite the first profile wall (8), is fastened to the other one of the two inner sides of the two main faces (4, 5) .

4. Car bodywork according to Claim 1, **characterized in that** the first profile (2) is fastened on at least one end side (9), preferably a plurality of end sides, of its profile walls (8, 10) to the node element (1) on one of the two inner sides of the two main faces (4, 5).

5. Car bodywork according to one of Claims 2 to 4, **characterized in that** an outer face of a first profile wall (8) of the first profile (2) is fastened to one end (11) of one of the two main faces (4, 5) of the node element (1).

6. Car bodywork according to one of Claims 2 to 5, **characterized in that** the second profile (3) is fastened on at least one end side, preferably a plurality of end sides, of its profile walls (12, 13) to the node element (1) on one of the two outer sides of the two main faces (4, 5).

7. Car bodywork according to at least one of the preceding claims, **characterized in that** the height of the node element (1) in the direction of the contact line (6) of the two main faces (4, 5) is greater than the corresponding height of the first and/or second profile (2, 3) which are/is fastened thereto, a height offset between the first and the second profile (2, 3) being configured, in particular, by means of the node element (1) .

8. Car bodywork according to at least one of the preceding claims, **characterized in that** the node element (1) has a cover face (14) on its upper side and/or on its underside, by way of which cover face (14) the first and second main face (4, 5) are connected to one another.

9. Car bodywork according to at least one of the preceding claims, **characterized in that** the node element (1) has at least one flange face (15) in the region of at least one connection to the first and/or second profile (2, 3).

10. Car bodywork according to at least one of the preceding claims, **characterized in that** at least one adhesively bonded bracket (16) is arranged in the region of at least one connection of the node element (1) to the first and/or second profile (2, 3).

11. Car bodywork according to at least one of the preceding claims, **characterized in that** the node element (1) has ribs (17) for reinforcement, in particular on at least one of the inner sides of the main faces (4, 5).

12. Car bodywork according to at least one of the preceding claims, **characterized in that** the car bodywork comprises at least one first node element (1.1) with an arrangement of profiles (2, 3) according to Claim 2, and comprises at least one second node element (1.2) with an arrangement of profiles (2, 3) according to Claim 4.

13. Car bodywork according to Claim 12, **characterized in that** the first node element (1.1) is structurally identical or inversely structurally identical to the second node element (1.2).

14. Car bodywork according to Claim 12 or 13, **characterized in that** the car bodywork comprises two first node elements (1.1) and two second node elements (1.2), a first node element (1.1) and a second node element (1.2) preferably being structurally identical to one another, and the other first node element (1.1) and second node element (1.2) being structurally identical to one another, and the two last-mentioned node elements (1.1, 1.2) being mirror-inverted with respect to the two first-mentioned node elements (1.1, 1.2).

15. Car bodywork according to at least one of the preceding claims, **characterized in that** the car bodywork comprises at least one triple node element (18), three profiles (2, 3, 19) from three different spatial directions being fastened to the triple node element (18), the triple node element (18) comprising a first main face (4) and a second main face (5), the two main faces (4, 5) being connected to one another at least in a first section along a connecting line (6) and, starting from the connecting line (6), being arranged at an acute angle (7) with respect to one another.

16. Car bodywork according to at least one of the preceding claims, **characterized in that** one of the two main faces (4, 5) has an offset (20), with the result that the two main faces (4, 5) are connected to one another in a second section along an offset connecting line (21) and, starting from the offset connecting line (21), are arranged at an oblique angle with respect to one another.

## Revendications

1. Carrosserie de véhicule comprenant un élément de noeud (1) ainsi qu'un premier et un deuxième profilé (2, 3),
l'élément de noeud (1) comportant une première surface principale (4) et une deuxième surface principale (5), les deux surfaces principales (4, 5) étant reliées l'une à l'autre le long d'une ligne de contact (6) et, partant de la ligne de contact (6), étant disposées l'une par rapport à l'autre à un angle aigu (7),
le premier et deuxième profilé (2, 3) étant fixés à l'élément de noeud (1),
le premier profilé (2) étant fixé à l'élément de noeud (1) au moins sur l'une des deux faces intérieures des deux surfaces principales (4, 5) situées à l'intérieur de l'angle aigu (7),
**caractérisée en ce que**
le deuxième profilé (3) est fixé à l'élément de noeud (1) au moins sur l'une des deux faces intérieures des deux surfaces principales (4, 5) situées à l'intérieur de l'angle aigu (7) ou est fixé à l'élément de noeud (1) sur l'une des deux faces extérieures des deux surfaces principales (4, 5).

2. Carrosserie de véhicule selon la revendication 1, **caractérisée en ce que** le premier profilé (2) est fixé sur toute sa surface à l'élément de noeud (1) par la surface extérieure d'une première paroi (8) du profilé sur au moins l'une des deux faces intérieures des deux surfaces principales (4, 5).

3. Carrosserie de véhicule selon la revendication 2, **caractérisée en ce que** la face frontale (9) d'une deuxième paroi (10), située face à la face frontale (9), du premier profilé est fixée à l'autre des deux faces intérieures des deux surfaces principales (4, 5).

4. Carrosserie de véhicule selon la revendication 1, **caractérisée en ce que** sur au moins une face frontale (9) et de préférence sur plusieurs faces frontales de ses parois (8, 10), le premier profilé (2) est fixé à l'élément de noeud (1) sur l'une des deux faces intérieures des deux surfaces principales (4, 5).

5. Carrosserie de véhicule selon l'une des revendications 2 à 4, **caractérisée en ce qu'**une surface extérieure d'une paroi (8) du premier profilé (2) est fixée à une extrémité (11) d'une des deux surfaces principales (4, 5) de l'élément de noeud (1).

6. Carrosserie de véhicule selon l'une des revendications 2 à 5, **caractérisée en ce que** sur au moins une face frontale et de préférence sur plusieurs faces frontales de ses parois (8, 10), le deuxième profilé (3) est fixé à l'élément de noeud (1) sur l'une des deux faces extérieures des deux surfaces principales (4, 5).

7. Carrosserie de véhicule selon au moins l'une des revendications précédentes, **caractérisée en ce que** dans la direction de la ligne de contact (6) des deux surfaces principales (4, 5), la hauteur de l'élément de noeud (1) est supérieure à la hauteur correspondante du premier et/ou du deuxième profilé (2, 3) qui y est fixé, un décalage de hauteur étant formée en particulier au moyen de l'élément de noeud (1) entre le premier et deuxième profilé (2, 3).

8. Carrosserie de véhicule selon au moins l'une des revendications précédentes, **caractérisée en ce que** sur sa face supérieure et/ou sur sa face inférieure, l'élément de noeud (1) présente une surface de couvercle (14) par laquelle la première et deuxième surface principale (4, 5) sont reliées l'une à l'autre.

9. Carrosserie de véhicule selon au moins l'une des revendications précédentes, **caractérisée en ce que** l'élément de noeud (1) présente au moins une surface de bride (15) au niveau d'au moins une liaison au premier et/ou au deuxième profilé (2, 3).

10. Carrosserie de véhicule selon au moins l'une des revendications précédentes, **caractérisée en ce qu'**un coude collé (16) est disposé au niveau d'au moins une liaison au premier et/ou au deuxième profilé (2, 3).

11. Carrosserie de véhicule selon au moins l'une des revendications précédentes, **caractérisée en ce que** l'élément de noeud (1) présente une nervuration (17) de rigidification, en particulier sur au moins l'une des faces intérieures des deux surfaces principales (4, 5).

12. Carrosserie de véhicule selon au moins l'une des revendications précédentes, **caractérisée en ce que** la carrosserie de véhicule comporte au moins un premier élément de noeud (1.1) doté d'un agencement de profilés (2, 3) selon la revendication 2 et au moins un deuxième élément de noeud (1.2) doté d'un agencement de profilés (2, 3) selon la revendication 4.

13. Carrosserie de véhicule selon la revendication 12, **caractérisée en ce que** le premier élément de noeud (1.1) a la même structure ou une structure symétrique en miroir par rapport à celle du deuxième élément de noeud (1.2).

14. Carrosserie de véhicule selon les revendications 12 ou 13, **caractérisée en ce que** la carrosserie de véhicule comporte deux premiers éléments de noeud (1.1) et deux deuxièmes éléments de noeud (1.2), un premier élément de noeud (1.1) et un deuxième élément de noeud (1.2) ayant de préférence la même structure, l'autre premier élément de noeud (1.1) et l'autre deuxième élément de noeud (1.2) ayant la même structure et les deux derniers éléments de noeud (1.1, 1.2) étant symétriques en miroir par rapport aux deux premiers éléments de noeud (1.1, 1.2).

15. Carrosserie de véhicule selon au moins l'une des revendications précédentes, **caractérisée en ce que** la carrosserie de véhicule comporte au moins un troisième élément de noeud (18), trois profilés (2, 3, 19) orientés dans trois directions spatiales différentes étant fixés au troisième élément de noeud (18), le troisième élément de noeud (18) comportant une première surface principale (4) et une deuxième surface principale (5), les deux surfaces principales (4, 5) étant reliées l'une à l'autre le long d'une ligne de contact (6) au moins dans une première partie et, partant de la ligne de contact (6), étant disposées l'une par rapport à l'autre à un angle aigu (7).

16. Carrosserie de véhicule selon au moins l'une des revendications précédentes, **caractérisée en ce que** l'une des deux surfaces principales (4, 5) présente un décalage (20) tel que les deux surfaces principales (4, 5) sont reliées l'une à l'autre dans une deuxième partie le long d'une ligne de liaison (21) décalée et, partant de la ligne de liaison (21) décalée, sont disposées l'une par rapport à l'autre à un angle obtus.
